# EUROPEAN PATENT SPECIFICATION

(11) **EP 2 289 307 B1**
(45) Date of publication and mention of the grant of the patent: **26.12.2012**
(21) Application number: 10173807.8
(22) Date of filing: 24.08.2010
(51) Int. Cl.: A01G 1/00, E02D 1/02, G01N 21/85

(54) **A method for measuring the dynamics of root development and apparatus for carrying out said method**
Verfahren zur Messung der Wurzelentwicklungsdynamik und Vorrichtung zur Durchführung dieses Verfahrens
Procédé de mesure des dynamiques de développement de racines et appareil pour effectuer ce procédé

(30) Priority: 28.08.2009 SI 200900233
(43) Date of publication of application: 02.03.2011
(73) Proprietor: Gozdarski institut Slovenije, 1000 Ljubljana (SI)
(72) Inventor: Zeleznik, Peter, 3302, Grize (SI); Ferlan, Mitja, 1352, Preserje (SI)
(74) Representative: Ivancic, Bojan

(56) References cited:
- WO-A1-91/14171
- GB-A- 1 242 009
- US-A- 4 445 788
- US-A- 5 128 882
- US-A1- 2003 030 790
- US-A1- 2006 139 037
- US-B1- 6 553 852

## Description

The present invention refers to a method of measuring the dynamics of root development by means of a probe inserted into the soil being investigated, and to an apparatus for carrying out said method.

A method and an apparatus of the aforementioned kind are known from a patent No. US 4,445,788. Known method is carried out by means of a probe comprising a plurality of sensors, said probe being inserted in the soil being investigated, and senses a plurality of soil characteristics at different locations. An apparatus for carrying out said known method comprises a hollow shell and at least two sensors for sensing soil characteristics, a display and a device for transfer of data from said sensors to said display. At least one of said sensors is of a kind to sense temperature. It is a drawback of said known solution that the temperature conditions in said hollow shell differs substantially from those in the surrounding soil having a result that collected results do not correspond to the real situation. In addition, said probe is subjected to the water condensate resulting in a necessity to clean said probe leading to unwanted movements thereof.

Furthermore, an apparatus is known (a so-called minirhizotron observation tube with the associated equipment) of a company Bartz Technology Corporation, by means of which the dynamics of root development is measured. Also with this embodiment, a significant drawback is represented by the fact that the temperature conditions in said apparatus differs substantially from those in the surrounding soil resulting in a non-compliance with the real situation. In addition, said probe is also subjected to the water condensate resulting in a necessity to clean said probe leading to unwanted movements thereof.

It is the object of the presented invention to create a method for measuring the dynamics of root development, which will remedy drawbacks of a known solution.

A further object of the invention is to create an apparatus for carrying out said method thus enabling a soil temperature profile in a probe as real as possible.

According to the present invention, the object as set above is solved in a manner that a transparent research tube (also called minirhizotron) is installed at the research site, an insertion being placed inside said research tube, said insertion consisting of a carrier pipe and a radially extended projection. After the expiration of required time, a user reads the measured values stored in a data logger where they have been transmitted by sensors, arranged in said carrier pipe of said insertion. Afterwards, the user removes said insertion from said transparent research tube and installs a camera into said transparent research tube. This action is followed by a picture taking session in said transparent research tube and re-insertion of said insertion into said transparent research tube.

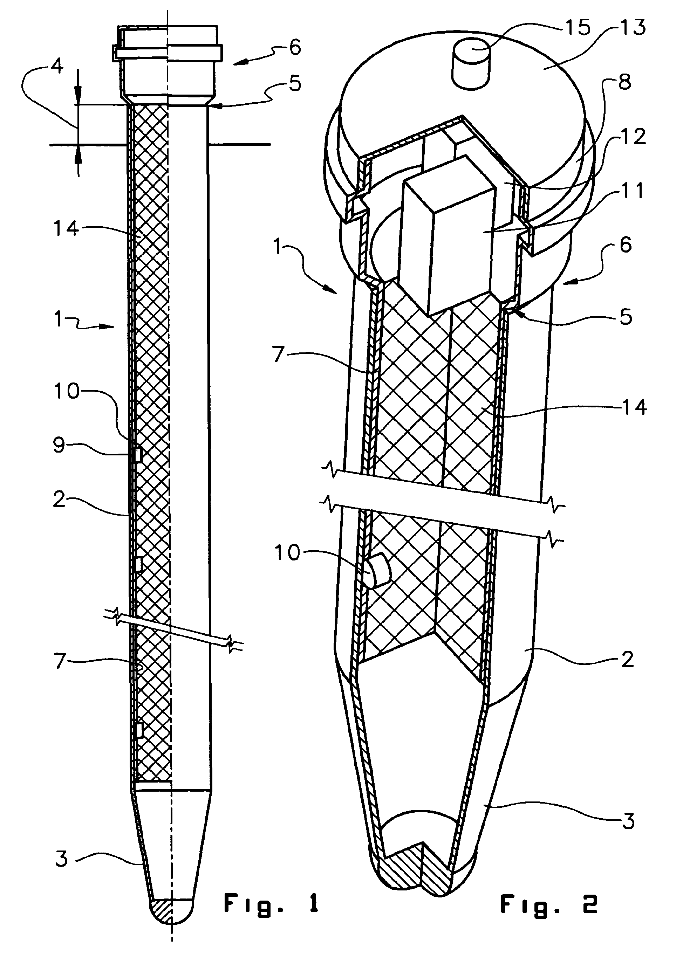

An apparatus for carrying out a method according to the invention is further described in detail on the basis of the preferred embodiment and with reference to the accompanying drawings, where
Fig. 1 shows a partial longitudinal section of an apparatus for carrying out a method according to the invention,
Fig. 2 shows a partial longitudinal section of an apparatus for carrying out a method according to invention in a three dimensional view.

An apparatus according to the invention for measuring dynamics of root development by means of a probe 1 inserted into the investigated soil, consists of a transparent research tube 2, which is at the end thereof intended to penetrate into the soil closed with a tip 3 that facilitates penetration of said tube 2 in a ready-made hole in the ground. Said research tube 2 is inserted into the soil to be investigated, in a manner that a smaller section 4 thereof protrudes above the surface of said soil, so that a user can easily access an entry 5 of said tube 2. Afterwards an insertion 6 is placed through said entry 5 into said research tube 2, said insertion 6 being formed in a manner that the outer diameter thereof fits with a loose fit to the internal diameter of said research tube 2, so that it can still be pulled out without requiring too much effort or special equipment.

Said insertion 6 having essentially the same length as the research tube 2, comprises a carrier pipe 7, a radially extended projection 8 being attached thereto at the end protruding from the research pipe 2, said projection 8 seats on said entry of said tube 2, thus preventing said insertion to slip too far into said research tube 2 when inserted therein. Said carrier pipe 7 is formed in the longitudinal direction thereof with plurality of radially extended through holes 9, temperature sensors 10 being arranged therein.

Each sensor 10 is connected to a data logger 11, comprising its own power supply, and/or to a power supply 12 being preferably arranged within said radially extended projection 8. Said projection 8 is efficiently closed in a manner known per se by means of a removable lid 13, thus preventing entry of moisture and/or other impurities in the interior of said carrier pipe 7 and said projection 8, respectively. The interior of said carrier pipe 7 is filled, from the area of the connection with radially extended projection 8 to the free end of said pipe 7, arranged in said research tube 2, with a heat insulating filler 14, which tightly fits to said carrier pipe 7 and simultaneously fixes said sensors 10. Said lid 13 is optionally formed with communication port 15 being associated with said data logger 11 and represents a connection point with optional device not shown, such as portable computer, to which either occasionally or continuously data are sent being previously transmitted by said sensors 10 to said data logger 11.

According to the invention, it is preferably provided for that said power supply 12 is located in said extended projection 8 of carrier pipe 7. However, it is also possible for said power supply to be arranged outside said carrier pipe 7, even at a remote location, and is in a manner known per se connected with said data logger 11 and/or sensors 10.

Measuring the dynamics of root development by means of said probe inserted into the soil being investigated, is carried out by means of the method according to the invention in a manner that the above described probe 1 according to the invention is inserted into the soil being investigated, whereby at first the transparent research tube 2 is inserted into the soil. Afterwards, said insertion 6 is placed into said research tube 2, by means of said insertion 6 said research tube 2 has been completely and tightly closed.

When the user reaches the measurement point, being represented by each probe 1, the data are transferred at first from said data logger 11, using for example a portable computer. Afterwards, that the user removes said inserted insertion 6 out of said research tube 2 and puts thereon a camera known per se and not shown, and at different depths of said tube 2 takes the required number of relevant images of roots.

## Claims

1. A method of measuring growth and decay of roots, particularly fine roots of green plants using a probe, inserted into the soil being investigated, ***characterized in that*** it comprises the following steps:
a) installing a transparent research tube (2) at the location of a measurement,
b) entering an insertion (6) in said research tube (2),
c) reading, after a required time, measured values from a data logger (11),
d) extracting said insertion (6) from said transparent research tube (2),
e) installing a camera in said transparent research tube (2),
f) taking a set of photos in said transparent research tube (2), and
g) re-entering said insertion (6) in said transparent research tube (2).

2. A method according to claim 1, ***characterized in that*** said measured values according to step c) are temperature values.

3. An apparatus for carrying out said method according to claims 1 and 2, comprising a probe (1), that can be inserted into the soil being investigated, ***characterized in that*** it comprises an insertion (6) arranged in a transparent research tube (2) and a camera installable in said tube (2), whereby a plurality of sensors (10), a data logger (11), and a power supply (12) are arranged in said insertion (6).

4. An apparatus according to claim 3, ***characterized in that*** insertion (6) comprises a carrier pipe (7), a radially extended projection (8) being attached thereto at the end thereof projecting out of the research tube (2), and a heat insulating filler (14) which tightly fills the interior of said carrier pipe (7) and tightly fits thereto, and whereby fixes said sensors (10).

5. An apparatus according to claims 3 and 4, ***characterized in that*** said carrier pipe (7) is formed at least on a section of the length thereof with a plurality of radially extending through holes (9) in which sensors (10) are arranged.

6. An apparatus according to claim 5, ***characterized in that*** said sensors (10) are temperature sensors.

7. An apparatus according to claims 3 to 6, ***characterized in that*** each sensor (10) is connected with the data logger (11) and/or power supply (12), which are preferably located within said radially extended projection (8) of the carrier pipe (7).

8. An apparatus according to claims 3 to 7, ***characterized in that*** said projection (8) is closed by means of a removable lid (13), a communication port (15) being attached thereto.

## Patentansprüche

1. Verfahren zur Messung von Wachstum und Zerfall von Wurzeln, insbesondere von feinen Wurzeln von grünen Pflanzen, welches eine Sonde verwendet, die in den zu untersuchenden Boden eingesetzt wird, **dadurch gekennzeichnet, dass** es die folgenden Schritte umfasst:
a) Installieren eines transparenten Untersuchungsrohres (2) an dem Ort einer Messung,
b) Einsetzen eines Einsatzes (6) in das Untersuchungsrohr (2),
c) Lesen der gemessenen Werte von einem Datenlogger (11) nach der erforderlichen Zeit;
d) Herausziehen des Einsatzes (6) aus dem transparenten Untersuchungsrohr (2),
e) Installieren einer Kamera in dem transparenten Untersuchungsrohr (2),
f) Erstellen eines Satzes von Fotos in dem transparent Untersuchungsrohr (2), und
g) Wiedereinsetzen des Einsatzes (6) in das transparente Untersuchungsrohr (2).

2. Verfahren nach Anspruch 1, **dadurch gekennzeichnet, dass** die gemessenen Werte nach Schritt c) Temperaturwerte sind.

3. Vorrichtung zum Durchführen des Verfahrens nach den Ansprüchen 1 und 2, umfassend eine Sonde (1), die in den zu untersuchenden Boden eingesetzt werden kann, **dadurch gekennzeichnet, dass** sie einen Einsatz (6) umfasst, der in einem transparenten Untersuchungsrohr (2) angeordnet ist, und eine Kamera, die in dem Rohr (2) installierbar ist, wobei eine Vielzahl von Sensoren (10), ein Datenlogger (11) und eine Energieversorgung (12) in dem Einsatz (6) angeordnet sind.

4. Vorrichtung nach Anspruch 3, **dadurch gekennzeichnet, dass** der Einsatz (6) ein Trägerrohr (7) umfasst, wobei ein radial erweiterter Vorsprung (8) an dem Ende davon, das aus dem Untersuchungsrohr (2) herausragt, angebracht ist, sowie ein wärmedämmendes Füllmaterial (14), das dicht das Innere des Trägerrohres (7) füllt und dicht darin eingepasst ist, wodurch die Sensoren (10) fixiert sind.

5. Vorrichtung nach den Ansprüchen 3 und 4, **dadurch gekennzeichnet, dass** das Trägerrohr (7) mindestens in einem Längenabschnitt davon mit einer Vielzahl von radial sich erstreckenden Durchbrechungen (9) ausgebildet ist, in welchen Sensoren (10) angeordnet sind.

6. Vorrichtung nach Anspruch 5, **dadurch gekennzeichnet, dass** die Sensoren (10) Temperatursensoren sind.

7. Vorrichtung nach den Ansprüchen 3 bis 6, **dadurch gekennzeichnet, dass** jeder Sensor (10) mit dem Datenlogger (11) und /oder der Energieversorgung (12) verbunden ist, die vorzugsweise innerhalb des radial erweiterten Vorsprungs (8) des Trägerrohres (7) angeordnet sind.

8. Vorrichtung nach den Ansprüchen 3 bis 7, **dadurch gekennzeichnet, dass** der Vorsprung (8) mit einem abnehmbaren Deckel (13) verschlossen ist, wobei ein Kommunikationsport (15) daran angebracht ist.

## Revendications

1. Procédé de mesure de la croissance et de la pourriture de racines, en particulier de racines fines de plantes vertes à l'aide d'une sonde, introduite dans le sol qui est examiné, ***caractérisé par le fait* qu'**il comprend les étapes suivantes:
a) l'installation d'un tube de recherche transparent (2) à l'emplacement d'une mesure,
b) l'entrée d'un insert (6) dans ledit tube de recherche (2),
c) la lecture, après un temps requis, de valeurs mesurées provenant d'un enregistreur de données (11),
d) l'extraction dudit insert (6) à partir dudit tube de recherche transparent (2),
e) l'installation d'un appareil photo dans ledit tube de recherche transparent (2),
f) la prise d'un ensemble de photos dans ledit tube de recherche transparent (2), et
g) l'entrée à nouveau dudit insert (6) dans ledit tube de recherche transparent (2).

2. Procédé selon la revendication 1, ***caractérisé par le fait que*** lesdites valeurs mesurées selon l'étape c) sont des valeurs de température.

3. Appareil pour mettre en oeuvre ledit procédé selon les revendications 1 et 2, comprenant une sonde (1), qui peut être introduite dans le sol qui est examiné, ***caractérisé par le fait* qu'**il comprend un insert (6) agencé dans un tube de recherche transparent (2) et un appareil photo apte à être installé dans ledit tube (2), une pluralité de capteurs (10), un enregistreur de données (11) et une alimentation électrique (12) étant agencés dans ledit insertion (6).

4. Appareil selon la revendication 3, ***caractérisé par le fait que*** l'insert (6) comprend un tuyau porteur (7), une saillie s'étendant radialement (8) qui est fixée à celui-ci à l'extrémité de celui-ci faisant saillie en dehors du tube de recherche (2), et un remplissage calorifuge (14) qui remplit hermétiquement l'intérieur dudit tuyau porteur (7) et s'adapte étroitement à celui-ci, et fixe ainsi lesdits capteurs (10).

5. Appareil selon les revendications 3 et 4, ***caractérisé par le fait que*** ledit tuyau porteur (7) comporte au moins sur une section de la longueur de celui-ci une pluralité de trous traversants s'étendant radialement (9) dans lesquels sont agencés des capteurs (10).

6. Appareil selon la revendication 5, ***caractérisé par le fait que*** lesdits capteurs (10) sont des capteurs de température.

7. Appareil selon les revendications 3 à 6, ***caractérisé par le fait que*** chaque capteur (10) est connecté à l'enregistreur de données (11) et/ou à l'alimentation électrique (12), qui sont, de préférence, situés à l'intérieur de ladite saillie s'étendant radialement (8) du tuyau porteur (7).

8. Appareil selon les revendications 3 à 7, ***caractérisé par le fait que*** ladite saillie (8) est fermée au moyen d'un couvercle amovible (13), un orifice de communication (15) étant fixé à celui-ci.
